# EUROPEAN PATENT APPLICATION

(11) **EP 4 799 715 A1**
(43) Date of publication of application: **02.09.2026**
(21) Application number: 26156183.1
(22) Date of filing: 03.02.2026
(51) Int. Cl.: B01D 61/36

(54) **METHOD OF REGENERATING ORGANIC SOLVENT, ORGANIC SOLVENT REGENERATOR, AND SUBSTRATE PROCESSING SYSTEM**

(30) Priority: 26.02.2025 JP 2025028889
(71) Applicant: SCREEN Holdings Co., Ltd., Kyoto-shi, Kyoto 602-8585 (JP)
(72) Inventor: IWAO, Michinori, Kyoto, 602-8585 (JP); YOSHIDA, Yukifumi, Kyoto, 602-8585 (JP); UEMURA, Tomohiro, Kyoto, 602-8585 (JP); MINAMI, Shoyo, Kyoto, 602-8585 (JP); UEDA, Yusuke, Kyoto, 602-8585 (JP); YAMAMOTO, Masaya, Kyoto, 602-8585 (JP)
(74) Representative: Kilian Kilian & Partner mbB

(57) **Abstract**

A method of regenerating an organic solvent includes: collecting a mixed liquid of an organic solvent and water in a collection tank, the organic solvent and the water being discharged from a substrate processing apparatus that processes a substrate; and performing a separation operation of circulating the mixed liquid through a circulation path formed by the collection tank and a circulation pipe in which a membrane separator is disposed, and reducing, using a decompression pump, a pressure in a second path partitioned by a separation membrane in the membrane separator from a first path which is inserted into the circulation pipe and through which the mixed liquid passes, the performing including controlling the decompression pump with a control set value based on a target concentration on a solvent concentration of the mixed liquid.

## Description

### BACKGROUND

### Technical Field

The present disclosure relates to a method of regenerating an organic solvent, an organic solvent regenerator, and a substrate processing system.

### Description of the Background Art

Japanese Patent Application Laid-Open No. 2017-41505 discloses an IPA collection system. The IPA collection system collects aqueous isopropyl alcohol (IPA) discharged from processing units that process substrates. The IPA collection system includes a storage tank, a circulation pipe, a pump, and a dewatering unit. The aqueous IPA from the processing units is supplied to the storage tank. The circulation pipe is connected to the storage tank, and returns the aqueous IPA from the storage tank to the storage tank. The pump is disposed in the circulation pipe, and sends the aqueous IPA from an upstream end toward a downstream end of the circulation pipe. The dewatering unit is disposed in the circulation pipe. The dewatering unit includes a concentration chamber, a permeation chamber, and a separation membrane that partitions the concentration chamber and the permeation chamber. The concentration chamber is inserted into the circulation pipe. The separation membrane allows water from the concentration chamber to pass through the permeation chamber, and does not allow the IPA to pass through the permeation chamber. A vacuum pump reduces a pressure in the permeation chamber. This allows water in the aqueous IPA in the concentration chamber to be suctioned into the permeation chamber.

The collection system circulates the aqueous IPA through a circulation path including the storage tank and the circulation pipe. This circulation allows the aqueous IPA to pass through the concentration chamber of the dewatering unit. An inflow of the water in the aqueous IPA into the permeation chamber through the separation membrane increases an IPA concentration of the aqueous IPA during the circulation. In other words, this circulation allows the aqueous IPA having a high IPA concentration to be stored in the storage tank. The aqueous IPA in this storage tank is again supplied to the processing units. This can reduce a waste amount of the IPA.

### SUMMARY

In Japanese Patent Application Laid-Open No. 2017-41505, when a controller operates the vacuum pump such that a pressure in the permeation chamber becomes lower, in the case where the target concentration on the IPA concentration is low, the vacuum pump is operated with unnecessarily large power. This may cause a decrease in the efficiency.

Thus, the present disclosure has an object of providing a technology that can implement a more efficient separation operation.

According to one aspect, a method of regenerating an organic solvent includes: collecting a mixed liquid of an organic solvent and water in a collection tank, the organic solvent and the water being discharged from a substrate processing apparatus that processes a substrate; and performing a separation operation of circulating the mixed liquid through a circulation path formed by the collection tank and a circulation pipe in which a membrane separator are disposed, and reducing, using a decompression pump, a pressure in a second path partitioned by a separation membrane in the membrane separator from a first path which is inserted into the circulation pipe and through which the mixed liquid passes, the performing including controlling the decompression pump with a control set value based on a target concentration on a solvent concentration of the mixed liquid.

According to one aspect, an organic solvent regenerator includes: a collection tank storing a mixed liquid of an organic solvent and water, the organic solvent and the water being discharged from a substrate processing apparatus that processes a substrate; a circulator including a circulation pipe connected to the collection tank, and a membrane separator disposed in the circulation pipe, the membrane separator including a first path which is inserted into the circulation pipe and through which the mixed liquid passes, a second path, and a separation membrane which partitions the first path and the second path and which allows the water in the mixed liquid to pass from the first path to the second path; a separation pipe connected to the second path of the membrane separator; a decompression pump that reduces a pressure in the second path through the separation pipe; and a controller that performs a separation operation of controlling the decompression pump with a control set value based on a target concentration on a solvent concentration of the mixed liquid, and causing the circulator to circulate the mixed liquid.

According to one aspect, a substrate processing system includes the organic solvent regenerator and the substrate processing apparatus.

These and other objects, features, aspects, and advantages of the present disclosure will become more apparent from the following detailed description of the present disclosure when taken in conjunction with the accompanying drawings.

### DESCRIPTION OF THE EMBODIMENTS

Embodiments will be described in detail below with reference to drawings. It should be noted that dimensions and the number of parts are shown in exaggeration or in simplified form as appropriate for the sake of easier understanding. The same reference signs are assigned to parts having similar structures and functions, and overlapping description will be omitted in the following description.

### BRIEF DESCRIPTION OF THE DRAWINGS

FIG. 1 is a diagram schematically illustrating one example structure of a substrate processing system including an organic solvent regenerator according to Embodiment 1;
FIG. 2 is a block diagram schematically illustrating one example configuration of a controller;
FIG. 3 illustrates graphs schematically indicating example time variations in a solvent concentration during a separation operation;
FIG. 4 is a flowchart illustrating first example operations of the substrate processing system according to Embodiment 1;
FIG. 5 is a flowchart indicating a first example method of determining a separation operation pattern;
FIG. 6 is a flowchart illustrating second example operations of the substrate processing system;
FIG. 7 is a flowchart indicating a second example method of determining a separation operation pattern;
FIG. 8 illustrates graphs indicating example separation operation patterns;
FIG. 9 is a flowchart indicating a third example method of determining a separation operation pattern;
FIG. 10 is a diagram schematically illustrating a first example structure of a substrate processing system according to Embodiment 2;
FIG. 11 is a flowchart illustrating first example operations of the substrate processing system according to Embodiment 2;
FIG. 12 is a diagram schematically illustrating a second example structure of the substrate processing system according to Embodiment 2;
FIG. 13 is a flowchart illustrating second example operations of the substrate processing system according to Embodiment 2; and
FIG. 14 is a diagram schematically illustrating an example structure of a substrate processing apparatus.

### DESCRIPTION OF THE PREFERRED EMBODIMENTS

In Japanese Patent Application Laid-Open No. 2017-41505, when a controller operates the vacuum pump such that a pressure in the permeation chamber becomes lower, in the case where the target concentration on the IPA concentration is low, the vacuum pump is operated with unnecessarily large power. This may cause a decrease in the efficiency.

Thus, the present disclosure has an object of providing a technology that can implement a more efficient separation operation.

Embodiments will be described in detail below with reference to drawings. It should be noted that dimensions and the number of parts are shown in exaggeration or in simplified form as appropriate for the sake of easier understanding. The same reference signs are assigned to parts having similar structures and functions, and overlapping description will be omitted in the following description.

Even when the ordinal numbers such as "first" and "second" are used in the following description, these terms are used for convenience to facilitate the understanding of the details of Embodiments. The order indicated by these ordinal numbers does not restrict the details of Embodiments.

Unless otherwise noted, the expressions indicating relative or absolute positional relationships (e.g., "in one direction", "along one direction", "parallel", "orthogonal", "central", "concentric", and "coaxial") include those exactly indicating the positional relationships and those where an angle or a distance is relatively changed within tolerance or to the extent that similar functions can be obtained. Unless otherwise noted, the expressions indicating equality (e.g., "same", "equal", and "homogeneous") include those indicating quantitatively exact equality and those in the presence of a difference within tolerance or to the extent that similar functions can be obtained. Unless otherwise noted, the expressions indicating shapes (e.g., "rectangular" or "cylindrical") include those indicating geometrically exact shapes and those indicating, for example, roughness or a chamfer to the extent that similar advantages can be obtained. An expression "comprising", "including", "containing", or "having" one constituent element is not an exclusive expression for excluding the presence of the other constituent elements. An expression "at least one of A, B, and C" involves "only A", "only B", "only C", "any two of A, B, and C", and "all of A, B, and C".

### [Embodiment 1]

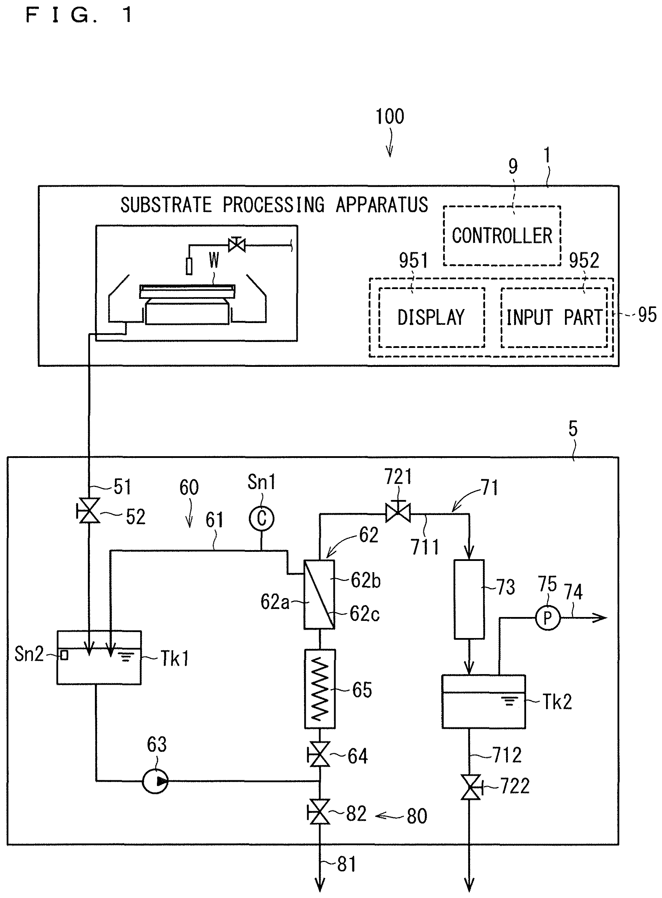

FIG. 1 is a diagram schematically illustrating one example structure of a substrate processing system 100 including an organic solvent regenerator 5 according to Embodiment 1.

The substrate processing system 100 includes a substrate processing apparatus 1, the organic solvent regenerator 5, and a controller 9. The substrate processing apparatus 1 is a processing apparatus that performs a wet process on a substrate W. The substrate processing apparatus 1 may be a single-wafer processing apparatus that processes substrates W one by one, or a batch processing apparatus that processes a plurality of substrates W in one batch. In the example of FIG. 1, the single-wafer processing apparatus is schematically illustrated.

Examples of the substrates W include a semiconductor wafer, a liquid crystal display substrate, an organic electroluminescence (EL) substrate, a flat panel display (FPD) substrate, an optical display substrate, a magnetic disk substrate, an optical disk substrate, a magneto-optical disk substrate, a photomask substrate, and a solar cell substrate. The substrates W have a thin plate shape. In the following, the substrates W are semiconductor wafers. For example, the substrates W are silicon substrates. The substrates W are, for example, disk-shaped. Each of the substrates W has a diameter of, for example, approximately 300 mm, and has a thickness of, for example, approximately more than or equal to 0.5 mm and less than or equal to 3 mm.

The substrate processing apparatus 1 supplies various processing liquids to the substrates W, and performs, on the substrates W, processes corresponding to the types of the processing liquids. While Embodiment 3 will outline an example specific structure of the substrate processing apparatus 1, for example, the substrate processing apparatus 1 supplies the substrate W with pure water (deionized water) and an organic solvent. For example, the substrate processing apparatus 1 supplies the substrate W with pure water, and then supplies the substrate W with an organic solvent. The substrate processing apparatus 1 supplies the substrate W with pure water, so that an object (e.g., a solid such as particles or a liquid such as a chemical solution) adhering to the substrate W can be rinsed out with the pure water. Next, the substrate processing apparatus 1 supplies the substrate W with an organic solvent, so that the liquid adhering to the substrate W can be replaced from the pure water with a rinse liquid. The organic solvent is, for example, an organic solvent more volatile than pure water or an organic solvent with a low surface tension, and is isopropyl alcohol (IPA) as an specific example. Next, the substrate processing apparatus 1 dries the substrate W. When the substrate W is dried, the organic solvent with high volatility and a low surface tension adheres to the substrate W. Thus, the substrate processing apparatus 1 can dry the substrate W more promptly or while avoiding pattern collapse of the substrate W.

A mixed liquid of an organic solvent and water which have been used for processing the substrate W is discharged from the substrate processing apparatus 1 to the organic solvent regenerator 5 through a collection pipe 51. In other words, the collection pipe 51 connects the substrate processing apparatus 1 to the organic solvent regenerator 5. The substrate processing apparatus 1 is, for example, provided upstairs (above the floor) in a factory, and the organic solvent regenerator 5 is, for example, provided downstairs (under the floor) in the factory.

The organic solvent regenerator 5 performs a separation operation of separating water from the mixed liquid to increase a concentration of the organic solvent in the mixed liquid. An example detailed structure and example detailed operations of the organic solvent regenerator 5 will be described later in detail. Hereinafter, the concentration of the organic solvent in the mixed liquid may be referred to as a solvent concentration.

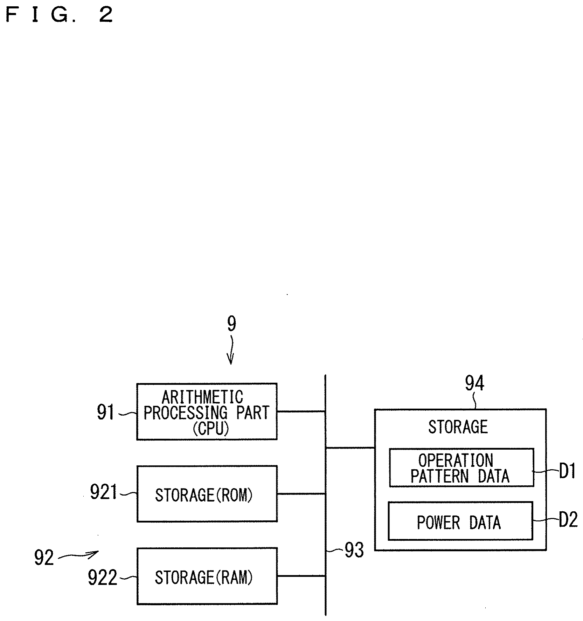

The controller 9 controls the substrate processing system 100. In other words, the controller 9 controls various structures of the substrate processing apparatus 1 and the organic solvent regenerator 5. FIG. 2 is a block diagram schematically illustrating one example configuration of the controller 9. The controller 9 is an electronic circuit, and includes, for example, an arithmetic processing part 91 and a storage 92. In a specific example of FIG. 2, the arithmetic processing part 91 and the storage 92 are mutually connected through a bus 93. The arithmetic processing part 91 is, for example, a central processing unit (CPU). The storage 92 may include a non-transitory storage (e.g., a read-only memory (ROM)) 921 and a transitory storage (e.g., a random-access memory (RAM)) 922. The non-transitory storage 921 may store, for example, a program for defining processes to be executed by the controller 9. The arithmetic processing part 91 executes this program, so that the controller 9 can execute the processes defined in the program. Obviously, hardware such as a dedicated logic circuit may execute a part or all the processes to be executed by the controller 9.

As illustrated in FIG. 2, the controller 9 may be electrically connected to a storage 94. The storage 94 is a non-transitory storage, and may be, for example, a memory or a hard disk. In the example of FIG. 2, the storage 94 stores operation pattern data D1 and power data D2. The operation pattern data D1 and the power data D2 will be described later in detail.

In the example of FIG. 1, the substrate processing system 100 includes a display 951. The display 951 is, for example, a liquid crystal display or an organic electroluminescence (EL) display. The display 951 is controlled by the controller 9, and displays various pieces of data. In the example of FIG. 1, the substrate processing system 100 includes an input part 952. The input part 952 receives an input from a user. The input part 952 outputs the input information to the controller 9. The input part 952 is, for example, an input device including at least one of a keyboard, a mouse, a microphone, and an image sensor. The display 951 and the input part 952 can form a user interface 95.

As illustrated in FIG. 1, the organic solvent regenerator 5 includes a collection tank Tk1, a circulator 60, a separation pipe 71, and a decompression pump 75.

The collection tank Tk1 is connected to a downstream end of the collection pipe 51. The mixed liquid discharged from the substrate processing apparatus 1 flows into the collection tank Tk1 through the collection pipe 51. The collection tank Tk1 stores the mixed liquid. In the example of FIG. 1, a collection valve 52 is disposed in the collection pipe 51. The collection valve 52 is controlled by the controller 9, and switches between closing and opening of the collection pipe 51. A buffer tank, which is not illustrated in FIG. 1, may be provided between the collection tank Tk1 and the substrate processing apparatus 1. The buffer tank may be provided, for example, between the substrate processing apparatus 1 and the collection valve 52.

Since a mixed liquid of pure water and an organic solvent which have been used for processing the substrate W flows into the collection tank Tk1, a solvent concentration of the mixed liquid in the collection tank Tk1 is initially low. Hereinafter, the solvent concentration of the mixed liquid before a separation operation is executed may be referred to as an initial concentration. For example, the initial concentration may be 80% or lower, 70% or lower, or 60% or lower. The initial concentration may be much lower than these.

The organic solvent regenerator 5 may include a storage amount sensor Sn2. The storage amount sensor Sn2 measures a storage amount of the mixed liquid in the collection tank Tkl, and outputs an electrical signal indicating a result of the measurement to the controller 9. The storage amount sensor Sn2 may be a liquid level sensor that detects a height position of a liquid level of the mixed liquid in the collection tank Tk1. The controller 9 may perform a separation operation when the storage amount of the mixed liquid in the collection tank Tk1 is larger than or equal to a predetermined reference collection amount.

The circulator 60 includes the circulation pipe 61 and a membrane separator 62. The circulation pipe 61 is connected to the collection tank Tk1. The circulation pipe 61 is a pipe that returns the mixed liquid from the collection tank Tk1 to the collection tank Tk1. In other words, an upstream end and a downstream end of the circulation pipe 61 are connected to the collection tank Tk1. The collection tank Tk1 and the circulation pipe 61 form a circulation path through which the mixed liquid circulates. In the example of FIG. 1, the upstream end of the circulation pipe 61 is connected to a bottom of the collection tank Tk1, and the downstream end of the circulation pipe 61 is connected to a ceiling of the collection tank Tk1.

In the example of FIG. 1, a liquid feeder 63 is disposed in the circulation pipe 61. The liquid feeder 63 allows a processing liquid to flow from the upstream end toward the downstream end of the circulation pipe 61. The liquid feeder 63 is, for example, a liquid pump, and is controlled by the controller 9. The liquid feeder 63 may be, for example, a magnetic levitation pump.

In the example of FIG. 1, a circulation valve 64 is disposed in the circulation pipe 61. The circulation valve 64 is controlled by the controller 9, and switches between closing and opening of the circulation pipe 61. In the example of FIG. 1, the circulation valve 64 is disposed on the downstream end side of the circulation pipe 61 with respect to the liquid feeder 63.

The membrane separator 62 is disposed in the circulation pipe 61, and separates water from the mixed liquid. Specifically, the membrane separator 62 includes a casing, and includes a first path 62a, a second path 62b, and a separation membrane 62c inside the casing. The first path 62a is inserted into the circulation pipe 61, and constitutes a part of the circulation path of the circulator 60. For this reason, the mixed liquid passes through the first path 62a. The separation membrane 62c partitions the first path 62a and the second path 62b. The separation membrane 62c is a membrane that allows water in the mixed liquid to pass from the first path 62a to the second path 62b, and substantially blocks the organic solvent. Consequently, the membrane separator 62 separates water from the mixed liquid.

The separation membrane 62c may be a zeolite membrane, an organic separation membrane, or a carbon nanotube (CNT) separation membrane. For example, the zeolite membrane has a crystal structure in which (SiO₄)⁴⁻ and (AlO₄)⁵⁻ having a tetrahedral structure are mutually coupled. The organic separation membrane is, for example, an organic film made of polyvinyl alcohol, chitosan, or polyimide. The CNT separation membrane is, for example, a membrane that is obtained by adding carbon nanotubes to a membrane made of polyamide or the like. Alternatively, a two-dimensional material may be adopted as the material of the separation membrane 62c. The two-dimensional material is a material composed of one layer of atoms, and, for example, may be molybdenum sulfide (MoS₂) or a composite atomic layer compound including an early transition metal (titanium, vanadium, or the like) and a light element (carbon or nitrogen). Alternatively, a metal organic framework (MOF) material or a carbon material (for example, graphene or graphene oxide) may be applied as a material of the separation membrane 62c. Here, a zeolite membrane is applied as the separation membrane 62c.

The separation pipe 71 is connected to the membrane separator 62. Water separated by the membrane separator 62 flows through the separation pipe 71. Specifically, an upstream end of the separation pipe 71 is connected to the second path 62b of the membrane separator 62. Thus, water passing through the separation membrane 62c flows into the separation pipe 71. Hereinafter, a fluid separated from the mixed liquid by the membrane separator 62 may be referred to as a separation fluid. The separation fluid contains water as a main component. The separation fluid may slightly contain an organic solvent.

The decompression pump 75 reduces the pressure in the second path 62b through the separation pipe 71. In the example of FIG. 1, a separation tank Tk2 is disposed in the separation pipe 71. The separation fluid separated by the membrane separator 62 flows into the separation tank Tk2. The separation tank Tk2 stores the separation fluid. In the separation pipe 71, a portion between the membrane separator 62 and the separation tank Tk2 may be referred to as a piping portion 711, and a portion downstream of the separation tank Tk2 may be referred to as a piping portion 712 hereinafter. In the example of FIG. 1, an upstream end of the piping portion 711 is connected to the second path 62b, and a downstream end of the piping portion 711 is connected to a ceiling of the separation tank Tk2. A downstream port of the piping portion 711 is opened above a liquid level of the separation fluid, in the separation tank Tk2. In the example of FIG. 1, an upstream end of the piping portion 712 is connected to a bottom of the separation tank Tk2.

In the example of FIG. 1, an upstream end of a decompression pipe 74 is also connected to the separation tank Tk2. For example, the upstream end of the decompression pipe 74 is connected to the ceiling of the separation tank Tk2. An upstream port of the decompression pipe 74 is opened above the liquid level of the separation fluid, in the separation tank Tk2. The decompression pipe 74 is connected to the decompression pump 75. The decompression pump 75 is controlled by the controller 9. Upon the decompression pump 75 being operated, the decompression pump 75 suctions gas in the second path 62b of the membrane separator 62 through the piping portion 711, the separation tank Tk2, and the decompression pipe 74 in this order. Thereby, the pressure in the second path 62b of the membrane separator 62 is reduced, and the water in the mixed liquid in the first path 62a is effectively suctioned by the second path 62b through the separation membrane 62c.

In the example of FIG. 1, a separation valve 721 is disposed in the piping portion 711 of the separation pipe 71. The separation valve 721 is controlled by the controller 9, and switches between closing and opening of the piping portion 711. In the example of FIG. 1, a separation valve 722 is disposed in the piping portion 712 of the separation pipe 71. The separation valve 722 is controlled by the controller 9, and switches between closing and opening of the piping portion 712.

In the example of FIG. 1, a temperature regulator 65 is disposed in the circulation pipe 61. The temperature regulator 65 regulates the temperature of the mixed liquid flowing through the circulation pipe 61. The temperature regulator 65 may include, for example, a heater. The heater may be an electric resistance heater with an electric heating wire, an optical heater that emits light (e.g., infrared rays) for heating, or an electronic cooling/heating unit including a Peltier element. The temperature regulator 65 heats the mixed liquid, so that the mixed liquid at a high temperature can flow into the membrane separator 62. The higher the temperature is, the higher the velocity of molecules in the mixed liquid is. Thus, water molecules in the mixed liquid at a high temperature easily pass through the separation membrane 62c. This allows the membrane separator 62 to separate the separation fluid from the mixed liquid with a higher degree of efficiency. The temperature regulator 65 is controlled by the controller 9.

In the example of FIG. 1, the membrane separator 62 is disposed on the downstream end side of the circulation pipe 61 with respect to the circulation valve 64. Furthermore, in the example of FIG. 1, the temperature regulator 65 is disposed on the upstream end side of the circulation pipe 61 with respect to the membrane separator 62. Since the temperature regulator 65 is disposed on the inflow side of the membrane separator 62, the temperature of the mixed liquid flowing into the membrane separator 62 can be regulated with higher accuracy. As a specific example, the temperature regulator 65 may be disposed between the circulation valve 64 and the membrane separator 62.

When the temperature regulator 65 heats the mixed liquid, much steam of the mixed liquid may flow through the circulation pipe 61. In other words, much water vapors and steam of the organic solvent may flow through the circulation pipe 61. Thus, the water vapors may pass through the separation membrane 62c of the membrane separator 62, and may flow into the separation pipe 71. In other words, the separation fluid may contain the water vapors.

Thus, as illustrated in FIG. 1, a cooler 73 may be disposed in the piping portion 711 of the separation pipe 71. The separation fluid flows into the cooler 73. The cooler 73 cools and condenses the separation fluid. The cooler 73 may include, for example, a heat exchanger (not illustrated), and a coolant supply source (not illustrated) that supplies a coolant to the heat exchanger. The heat exchanger includes a separation path through which the separation fluid passes, and a coolant path through which a coolant passes. The separation fluid is cooled by heat exchange between the separation fluid in the separation path and the coolant in the coolant path. The coolant supply source cools the coolant flowing from the heat exchanger, and supplies the cooled coolant to the heat exchanger. The coolant supply source may be, for example, a heat pump. The separation fluid condensed by the cooler 73 (i.e., a separated liquid) is supplied to the separation tank Tk2, and is stored in the separation tank Tk2.

The controller 9 controls various structures of the organic solvent regenerator 5 such that the separation operation is performed. As a specific example, the controller 9 opens the circulation valve 64 and the separation valve 721, and operates the temperature regulator 65, the liquid feeder 63, the cooler 73, and the decompression pump 75 such that the separation operation is performed. This allows the mixed liquid to circulate through the circulation path including the collection tank Tk1 and the circulation pipe 61. This circulation continues to route the mixed liquid through the membrane separator 62. Since the decompression pump 75 reduces the pressure in the second path 62b, mainly water (containing water vapors) in the mixed liquid is suctioned from the first path 62a to the second path 62b through the separation membrane 62c. Thereby, the membrane separator 62 continues to separate the separation fluid (mainly water) from the mixed liquid, and the separation fluid continues to be discharged through the separation pipe 71. Thus, a solvent concentration of the mixed liquid in the circulation path increases with time.

In the example of FIG. 1, the organic solvent regenerator 5 includes a concentration sensor Sn1. The concentration sensor Sn1 measures the solvent concentration of the mixed liquid, and outputs an electrical signal indicating a result of the measurement to the controller 9. In the example of FIG. 1, the concentration sensor Sn1 is disposed in the circulation pipe 61. As a specific example, the concentration sensor Sn1 is disposed on the downstream end side of the circulation pipe 61 with respect to the membrane separator 62. The concentration sensor Sn1 measures the solvent concentration of the mixed liquid flowing through the circulation pipe 61. Since the solvent concentration of the mixed liquid flowing through the circulation pipe 61 is almost equal to the solvent concentration of the mixed liquid in the collection tank Tk1, the concentration sensor Sn1 can indirectly measure the solvent concentration of the mixed liquid in the collection tank Tk1. The controller 9 may stop the separation operation when the solvent concentration measured by the concentration sensor Sn1 is higher than or equal to a target concentration.

The separation operation allows the mixed liquid with the solvent concentration higher than or equal to the target concentration to be stored in the collection tank Tk1. Hereinafter, the mixed liquid with the solvent concentration higher than or equal to the target concentration may be referred to as a concentrate.

In the example of FIG. 1, the organic solvent regenerator 5 includes a concentrate supply part 80. The concentrate supply part 80 supplies the concentrate in the collection tank Tk1 to an exterior. The exterior herein means an exterior of the organic solvent regenerator 5. The concentrate supply part 80 may supply the substrate processing apparatus 1 with the concentrate. The substrate processing apparatus 1 supplies the substrate W with the concentrate. Thereby, the substrate processing system 100 can recycle the organic solvent. In other words, the organic solvent regenerator 5 contributes to saving of the organic solvent.

In the example of FIG. 1, the concentrate supply part 80 includes a supply pipe 81 and a supply valve 82. In the example of FIG. 1, an upstream end of the supply pipe 81 is connected to the circulation pipe 61 between the liquid feeder 63 and the circulation valve 64. A downstream end of the supply pipe 81 is connected to an exterior. The supply valve 82 is disposed in the supply pipe 81. The supply valve 82 is controlled by the controller 9, and switches between closing and opening of the supply pipe 81.

The controller 9 opens the supply valve 82 with the concentrate being stored in the collection tank Tk1, and operates the liquid feeder 63. Thereby, the concentrate in the collection tank Tk1 is supplied to an exterior through the supply pipe 81. Here, the controller 9 may stop the circulation by the circulator 60. In other words, the organic solvent regenerator 5 may supply the concentrate to an exterior while stopping the separation operation. The upstream end of the supply pipe 81 may be connected to, for example, the bottom of the collection tank Tk1. Here, a liquid feeder different from the liquid feeder 63 is disposed in the supply pipe 81.

As described above, the organic solvent regenerator 5 performs the separation operation of increasing the solvent concentration of the mixed liquid discharged from the substrate processing apparatus 1.

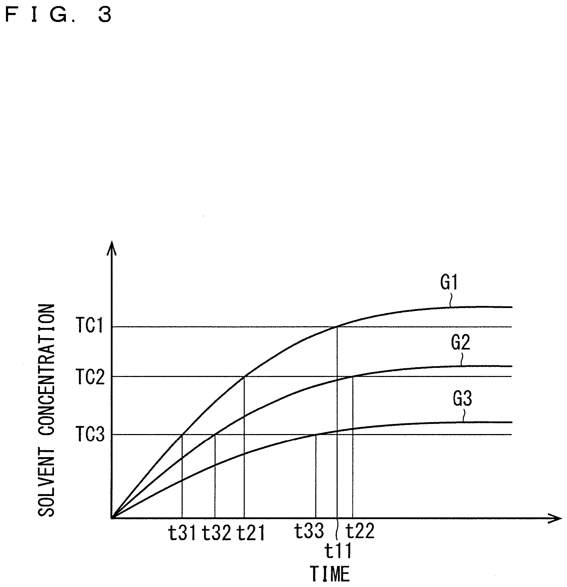

Next, a relationship between the solvent concentration and the pressure in the second path 62b of the membrane separator 62 during the separation operation will be described. FIG. 3 illustrates graphs schematically indicating example time variations in the solvent concentration during the separation operation. In the example of FIG. 3, a plurality of graphs G1 to G3 are indicated. The graphs G1 to G3 are obtained through, for example, simulations or experiments. The graphs G1 to G3 are graphs obtained by varying an operation state of the decompression pump 75. In other words, the graphs G1 to G3 are graphs obtained by varying the pressure in the second path 62b controlled by the decompression pump 75. Specifically, the graph G1 indicates a time variation in the solvent concentration when the pressure in the second path 62b is the lowest, and the graph G3 indicates a time variation in the solvent concentration when the pressure in the second path 62b is the highest. The range of the target pressure in the second path 62b may be, for example, 100 kPa or lower.

As seen from FIG. 3, the solvent concentrations during the separation operation increase with time, and converge at some future time. The lower the pressure in the second path 62b is, the higher the concentration convergence value is. This concentration convergence value is mainly determined by the pressure in the second path 62b. Hereinafter, the time variation in the solvent concentration may be referred to as a separation operation pattern. The separation operation pattern differs depending on the pressure in the second path 62b. Put it differently, the separation operation pattern depends on an operation state of the decompression pump 75.

The controller 9 controls the decompression pump 75 based on a control set value to be described next. The control set value is a set value (a target value) correlated with the pressure in the second path 62b, and may be, for example, a target pressure indicating a target value of the pressure in the second path 62b. For example, a pressure sensor that measures the pressure in the second path 62b may be provided. The controller 9 may control the decompression pump 75 such that the pressure measured by the pressure sensor is closer to the target pressure. Alternatively, the control set value may be, for example, a target speed indicating a target value on a rotation speed of the decompression pump 75. For example, a speed sensor (may be referred to as an encoder) that measures the rotation speed of the decompression pump 75 may be provided. The controller 9 may control the decompression pump 75 such that the speed measured by the speed sensor is closer to the target speed. As the rotation speed is higher, the decompression pump 75 can reduce the pressure in the second path 62b.

The plurality of separation operation patterns indicate time variations in the solvent concentration in performing the separation operation while the decompression pump 75 is controlled with different control set values. For example, the separation operation pattern of the graph G1 indicates the time variation in the solvent concentration when the separation operation is performed with the control set value with which the pressure in the second path 62b is the lowest. In other words, each of the separation operation patterns corresponds to a control set value.

In Embodiment 1, the controller 9 controls the decompression pump 75 with a control set value based on a target concentration on a solvent concentration. Target concentration data indicating the target concentration is, for example, set in advance, and is input into the controller 9. For example, the user may input the target concentration into the controller 9 using the user interface 95. Alternatively, an external device may transmit the target concentration data to the substrate processing apparatus 1 (the controller 9) through a cable or wirelessly.

The controller 9 performs the separation operation of controlling the decompression pump 75 with the control set value corresponding to the target concentration, and causing the circulator 60 to circulate the mixed liquid. Specifically, the controller 9 controls the decompression pump 75 with one of the control set values corresponding to a separation operation pattern in which at least a concentration convergence value is higher than or equal to a target concentration. In the example of FIG. 3, target concentrations TC1, TC2, and TC3 are indicated. The target concentration TC1 is lower than a concentration convergence value of the graph G1, and is higher than concentration convergence values of the graphs G2 and G3. The target concentration TC1 may be set, for example, higher than or equal to 99 wt%. The target concentration TC2 is lower than the target concentration TC1. In the example of FIG. 3, the target concentration TC2 is lower than the concentration convergence values of the graphs G1 and G2, and is higher than the concentration convergence value of the graph G3. The target concentration TC2 may be set to, for example, approximately 95 wt%. The target concentration TC3 is lower than the target concentration TC2. In the example of FIG. 3, the target concentration TC3 is lower than the concentration convergence values of the graphs G1 to G3. The target concentration TC3 may be set to, for example, approximately 90 wt%.

For example, when the target concentration is the target concentration TC1, the controller 9 controls the decompression pump 75 with a control set value corresponding to a first separation operation pattern of the graph G1. When the target concentration is the target concentration TC2, the controller 9 controls the decompression pump 75 with a control set value corresponding to the first separation operation pattern or a second separation operation pattern of the graph G2. When the target concentration is the target concentration TC3, the controller 9 controls the decompression pump 75 with a control set value corresponding to one of the first separation operation pattern, the second separation operation pattern, and a third separation operation pattern of the graph G3. This allows the organic solvent regenerator 5 to more reliably raise the solvent concentration of the mixed liquid to or above the target concentration.

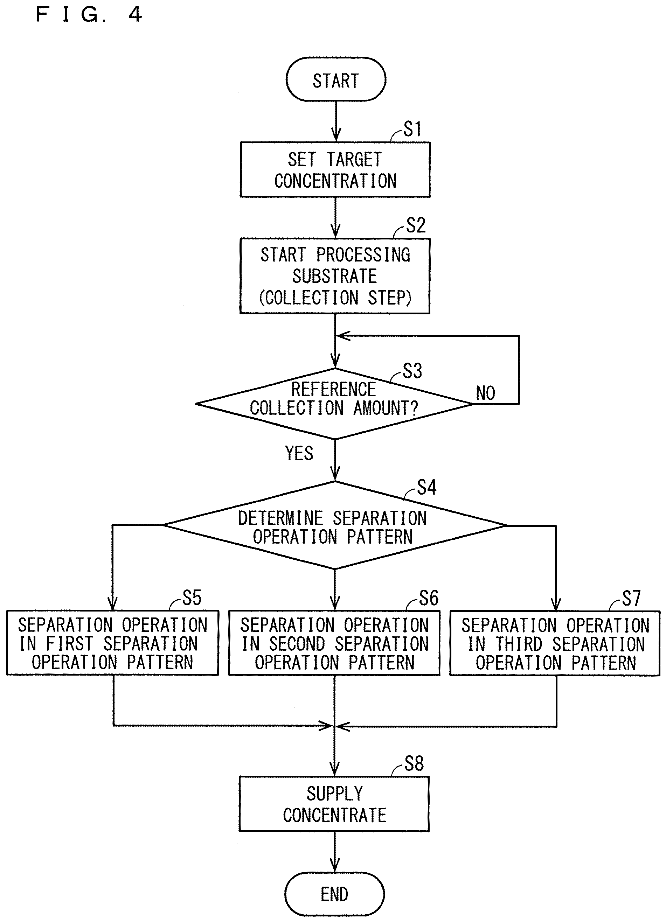

FIG. 4 is a flowchart illustrating first example operations of the substrate processing system 100 according to Embodiment 1. In the example of FIG. 4, first, a target concentration of a mixed liquid is set (Step S1: a target concentration setting step). As a specific example, the user inputs the target concentration into the controller 9 using the user interface 95.

Next, the controller 9 controls the substrate processing apparatus 1 such that a process on the substrate W is started (Step S2: a substrate processing start step: a collection step). Thereby, the substrate processing apparatus 1 supplies the substrate W with pure water and an organic solvent. The pure water and the organic solvent which have been used for processing the substrate W are discharged from the substrate processing apparatus 1 to the collection tank Tk1 through the collection pipe 51. In other words, the collection tank Tk1 collects a mixed liquid of the organic solvent and the water which have been discharged from the substrate processing apparatus 1. Thus, the storage amount of the mixed liquid in the collection tank Tk1 increases with time.

Next, the controller 9 determines whether the storage amount of the mixed liquid in the collection tank Tk1 is larger than or equal to a reference collection amount (Step S3: a storage amount determining step). For example, the storage amount sensor Sn2 measures the storage amount of the mixed liquid in the collection tank Tk1, and outputs a result of the measurement to the controller 9. The controller 9 compares the storage amount of the mixed liquid which has been measured by the storage amount sensor Sn2, with the reference collection amount set in advance. When the storage amount is smaller than the reference collection amount yet, the controller 9 executes Step S3 again.

When the storage amount of the mixed liquid which has been measured by the storage amount sensor Sn2 is larger than or equal to the reference collection amount, the controller 9 causes the organic solvent regenerator 5 to start a separation operation. First, the controller 9 may close the collection valve 52. Here, another collection tank may collect the mixed liquid from the substrate processing apparatus 1. For example, the controller 9 may cause the other collection tank to collect the mixed liquid by opening a valve of a branch pipe (not illustrated) which branches off from the collection pipe 51 and is connected to the other collection tank. Alternatively, when a buffer tank is provided in the collection pipe 51 between the substrate processing apparatus 1 and the collection valve 52, the buffer tank collects the mixed liquid.

Next, the controller 9 determines a separation operation pattern based on the target concentration set in Step S1 (Step S4: a separation operation pattern determining step). For example, the controller 9 employs a separation operation pattern in which the concentration convergence value is higher than or equal to the target concentration. For example, when the target concentration is the target concentration TC1, the controller 9 determines the separation operation pattern to be the first separation operation pattern. In other words, the controller 9 performs the separation operation of controlling the decompression pump 75 with the control set value corresponding to the first separation operation pattern, and causing the circulator 60 to circulate the mixed liquid (Step S5: a separation operation step). Specifically, the controller 9 opens the circulation valve 64 and the separation valve 721, operates the temperature regulator 65, the liquid feeder 63, and the cooler 73, and controls the decompression pump 75 with the control set value corresponding to the first separation operation pattern. In other words, the controller 9 controls the decompression pump 75 with the control set value based on the target concentration TC1.

For example, when the target concentration is the target concentration TC2, the controller 9 determines the separation operation pattern to be the second separation operation pattern. In other words, the controller 9 performs the separation operation of controlling the decompression pump 75 with the control set value corresponding to the second separation operation pattern, and causing the circulator 60 to circulate the mixed liquid (Step S6: the separation operation step). Specifically, the controller 9 opens the circulation valve 64 and the separation valve 721, operates the temperature regulator 65, the liquid feeder 63, and the cooler 73, and controls the decompression pump 75 with the control set value corresponding to the second separation operation pattern. In other words, the controller 9 controls the decompression pump 75 with the control set value based on the target concentration TC2.

For example, when the target concentration is the target concentration TC3, the controller 9 determines the separation operation pattern to be the third separation operation pattern. In other words, the controller 9 performs the separation operation of controlling the decompression pump 75 with the control set value corresponding to the third separation operation pattern, and causing the circulator 60 to circulate the mixed liquid (Step S7: the separation operation step). Specifically, the controller 9 opens the circulation valve 64 and the separation valve 721, operates the temperature regulator 65, the liquid feeder 63, and the cooler 73, and controls the decompression pump 75 with the control set value corresponding to the third separation operation pattern. In other words, the controller 9 controls the decompression pump 75 with the control set value based on the target concentration TC3.

When the separation operation in one of Steps S5 to S7 makes the solvent concentration of the mixed liquid in the collection tank Tk1 higher than or equal to the target concentration, the controller 9 stops the separation operation. For example, the controller 9 stops the separation operation when the solvent concentration measured by the concentration sensor Sn1 is higher than or equal to the target concentration. Specifically, the controller 9 closes the circulation valve 64 and the separation valve 721, and stops the temperature regulator 65, the liquid feeder 63, the cooler 73, and the decompression pump 75.

Next, the organic solvent regenerator 5 supplies the concentrate in the collection tank Tk1 to an exterior (Step S8: a concentrate supplying step). Specifically, the controller 90 opens the supply valve 82 to operate the liquid feeder 63. Thereby, the concentrate in the collection tank Tk1 is supplied to an exterior through the supply pipe 81.

As described above, the controller 9 controls, in a separation operation, the decompression pump 75 with a control set value corresponding to a separation operation pattern in which a concentration convergence value is higher than or equal to a target concentration. This allows the organic solvent regenerator 5 to more reliably set the solvent concentration of the mixed liquid higher than or equal to the target concentration.

The power of the decompression pump 75 varies depending on a control set value. For example, when the control set value is a target pressure, the power of the decompression pump 75 tends to be higher as the target pressure is lower. For example, when the control set value is a target speed of the decompression pump 75, the power of the decompression pump 75 tends to be higher as the target speed is higher.

Thus, the controller 9 may control the decompression pump 75 with a control set value with which the pressure in the second path 62b becomes lower as the target concentration is higher. For example, when the target concentration is the target concentration TC1, the controller 9 controls the decompression pump 75 with the control set value corresponding to the first separation operation pattern (Step S5). When the target concentration is the target concentration TC2, the controller 9 controls the decompression pump 75 with the control set value corresponding to the second separation operation pattern (Step S6). When the target concentration is the target concentration TC3, the controller 9 controls the decompression pump 75 with the control set value corresponding to the third separation operation pattern (Step S7). Consequently, the pressure in the second path 62b is lower when the target concentration is higher. This allows the organic solvent regenerator 5 to more reliably raise the solvent concentration of the mixed liquid to or above the target concentration. When the target concentration is low, the organic solvent regenerator 5 can control the decompression pump 75 with lower power. Consequently, the organic solvent regenerator 5 can implement more efficient operations.

As seen from FIG. 3, the minimal operation time required for the solvent concentration of the mixed liquid to reach the target concentration differs depending on a separation operation pattern, that is, a control set value. For example, when the target concentration is the target concentration TC3, the minimal operation time t31 corresponding to the first separation operation pattern is the shortest, the minimal operation time t33 corresponding to the third separation operation pattern is the longest, and the minimal operation time t32 corresponding to the second separation operation pattern is longer than the minimal operation time t31 and shorter than the minimal operation time t33. In other words, the minimal operation time is shorter as the pressure in the second path 62b is lower. Putting it differently, the minimal operation time is shorter as the target pressure is lower or as the target speed is higher.

As described above, the power and the minimal operation time of the decompression pump 75 depend on a separation operation pattern. Thus, the amount of power required for the solvent concentration to reach the target concentration (= power × the minimal operation time) also depends on the separation operation pattern. Hereinafter, the amount of power required to reach the target concentration may be referred to as a required amount of power.

In Embodiment 1, the controller 9 employs a separation operation pattern to be used for a separation operation, among a plurality of separation operation patterns. Thus, the controller 9 can employ a separation operation pattern in which the required amount of power is smaller. This allows the organic solvent regenerator 5 to raise the solvent concentration of the mixed liquid to or above the target concentration with a smaller amount of power.

For example, the controller 9 may calculate a required amount of power for each control set value (i.e., for each separation operation pattern) of the decompression pump 75, and control the decompression pump 75 with a control set value with which the required amount of power is smaller. For example, the storage 94 stores the operation pattern data D1 and the power data D2 in advance (see also FIG. 2). The operation pattern data D1 is data indicating, for each control set value, a separation operation pattern that represents a time variation in the solvent concentration during a separation operation. The power data D2 is data indicating the power of the decompression pump 75 for each control set value (i.e., for each separation operation pattern). The operation pattern data D1 and the power data D2 are set in advance by, for example, simulations or experiments.

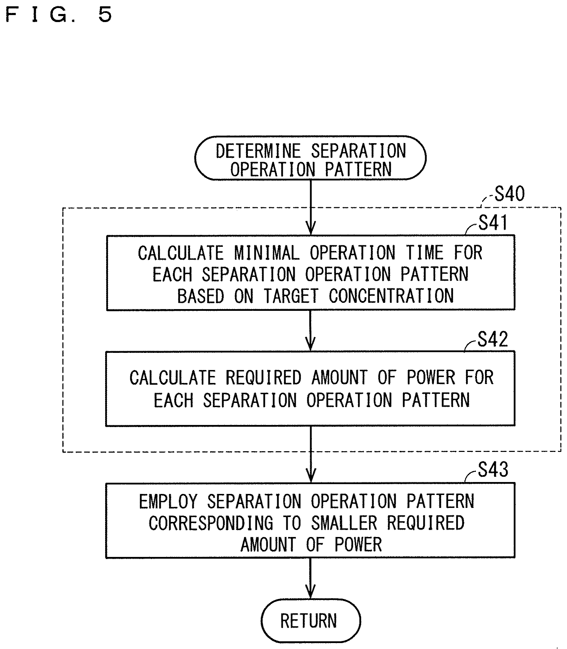

FIG. 5 is a flowchart indicating a first example method of determining a separation operation pattern. The controller 9 calculates a required amount of power for each of the separation operation patterns, based on the target concentration, the operation pattern data D1, and the power data D2 (Step S40). For example, the controller 9 first calculates the minimal operation time for each of the separation operation patterns, based on the target concentration and the operation pattern data D1 (Step S41). The minimal operation time may be, for example, the time at which the solvent concentration matches the target concentration in each of the separation operation patterns (see also FIG. 3).

As a specific example, when the target concentration is the target concentration TC3, the controller 9 calculates the minimal operation time t31 corresponding to the first separation operation pattern, the minimal operation time t32 corresponding to the second separation operation pattern, and the minimal operation time t33 corresponding to the third separation operation pattern. When the target concentration is the target concentration TC2, the controller 9 calculates the minimal operation time t21 corresponding to the first separation operation pattern and the minimal operation time t22 corresponding to the second separation operation pattern. Since the concentration convergence value of the third separation operation pattern is lower than the target concentration TC2, the minimal operation time of the third separation operation pattern is not calculated. When the target concentration is the target concentration TC1, the controller 9 calculates the minimal operation time t11 corresponding to the first separation operation pattern. Since the concentration convergence value of each of the second and third separation operation patterns is lower than the target concentration TC1, the minimal operation times of the second and third separation operation patterns are not calculated.

Next, the controller 9 calculates a required amount of power for each of the separation operation patterns, based on the calculated minimal operation time and the power data D2 (Step S42). For example, a case where the target concentration TC3 is set will be described. The controller 9 multiplies the minimal operation time t31 corresponding to the first separation operation pattern by the power corresponding to the first separation operation pattern to calculate a required amount of power corresponding to the first separation operation pattern. The same applies to the second and third separation operation patterns. Consequently, the controller 9 can obtain a required amount of power of the decompression pump 75 in performing the separation operation in the first separation operation pattern, a required amount of power of the decompression pump 75 in performing the separation operation in the second separation operation pattern, and a required amount of power of the decompression pump 75 in performing the separation operation in the third separation operation pattern.

Next, the controller 9 employs a separation operation pattern corresponding to a required amount of power smaller than an average amount of power of these required amounts of power (Step S43). As a specific example, the controller 9 employs a separation operation pattern corresponding to the smallest required amount of power among a plurality of required amounts of power.

Then, the controller 9 controls the decompression pump 75 with a control set value corresponding to the separation operation pattern employed in Step S43 (one of Steps S5 to S7).

As described above, the controller 9 calculates a required amount of power for each of the separation operation patterns, and controls the decompression pump 75 with a control set value with which the required amount of power is smaller. This allows the organic solvent regenerator 5 to increase the solvent concentration of the mixed liquid with a smaller amount of power consumption.

The solvent concentration of the mixed liquid discharged from the substrate processing apparatus 1 depends on details (a recipe) on processing the substrate W by the substrate processing apparatus 1. For example, when the substrate processing apparatus 1 supplies the substrate W with pure water at a higher flow rate and for a longer time, the solvent concentration of the mixed liquid discharged from the substrate processing apparatus 1 decreases. When the substrate processing apparatus 1 supplies the substrate W with an organic solvent at a higher flow rate and for a longer time, the solvent concentration of the mixed liquid discharged from the substrate processing apparatus 1 increases. Thus, it is assumed that the initial concentration of the mixed liquid discharged from the substrate processing apparatus 1 varies. For example, a change in the recipe may vary the initial concentration.

Furthermore, the minimal operation time for making the solvent concentration of the mixed liquid in the collection tank Tk1 higher than or equal to the target concentration also depends on the initial concentration. Specifically, the lower the initial concentration is, the longer the minimal operation time is. Thus, the controller 9 may calculate the minimal operation time, based on not only the target concentration and the operation pattern data D1 but also the initial concentration.

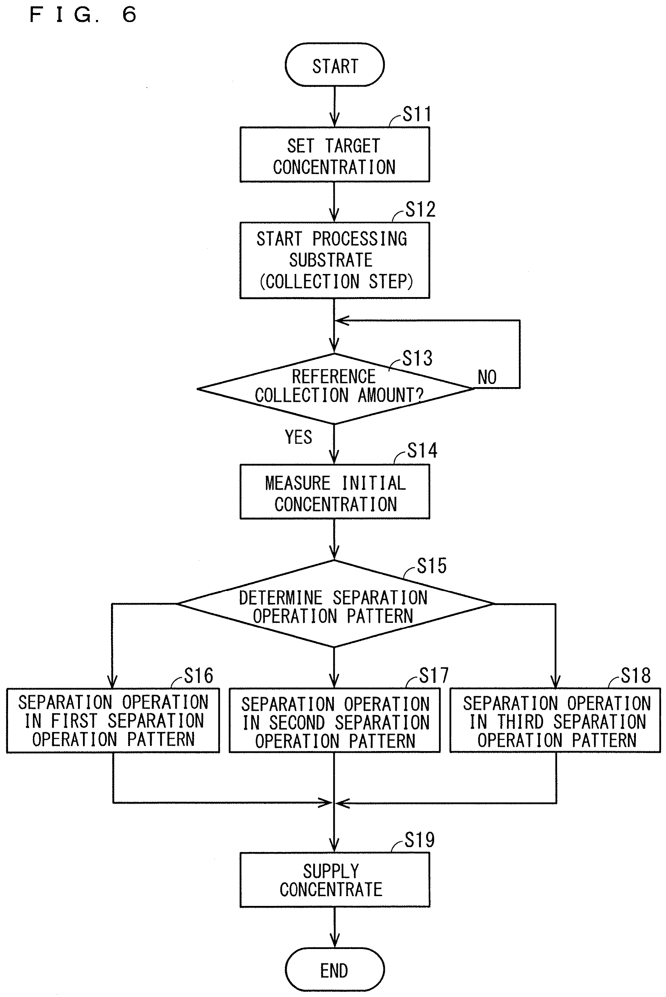

FIG. 6 is a flowchart illustrating second example operations of the substrate processing system 100. In the example of FIG. 6, Steps S11 to S19 are executed. Steps S11 to S13 are identical to Steps S1 to S3.

In Step S13, when the storage amount measured by the storage amount sensor Sn2 is larger than or equal to the predetermined reference collection amount, the concentration sensor Sn1 measures the initial concentration in the collection tank Tk1 (Step S14). For example, the controller 9 causes the circulator 60 to circulate the mixed liquid while stopping the decompression pump 75 and closing the separation valve 721. Specifically, the controller 90 opens the circulation valve 64 to operate the liquid feeder 63. This causes the mixed liquid to circulate through the circulation path. The controller 9 need not operate the temperature regulator 65. Then, the concentration sensor Sn1 measures the solvent concentration of the circulating mixed liquid. Thereby, the concentration sensor Sn1 can indirectly measure the initial concentration of the mixed liquid in the collection tank Tk1.

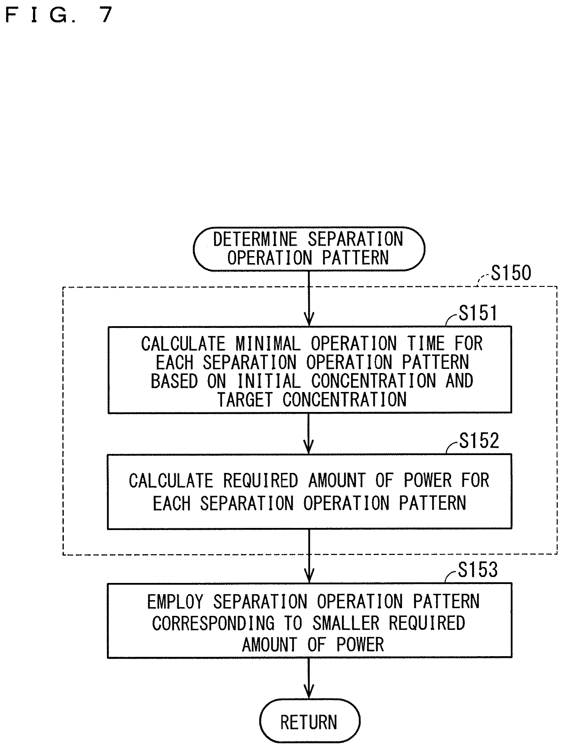

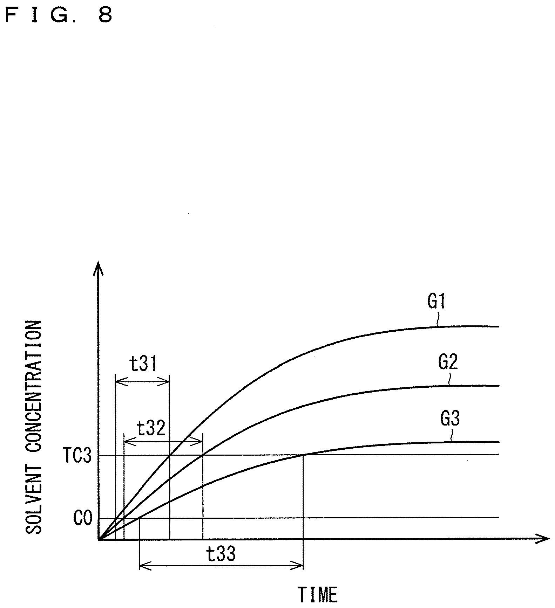

Next, the controller 9 determines a separation operation pattern (Step S15). FIG. 7 is a flowchart indicating a second example method of determining a separation operation pattern. The controller 9 calculates a required amount of power for each of the separation operation patterns, based on the target concentration, the initial concentration, the operation pattern data D1, and the power data D2 (Step S150). For example, the controller 9 first calculates the minimal operation time for each of the operation patterns, based on the initial concentration, the target concentration, and the operation pattern data D1 (Step S151). FIG. 8 illustrates graphs indicating example separation operation patterns. FIG. 8 also indicates the initial concentration C0 and the target concentration TC3. The minimal operation time is a period of time from a time at which the solvent concentration matches the initial concentration C0 to a time at which the solvent concentration matches the target concentration in each of the separation operation patterns.

For example, when the target concentration is the target concentration TC3, the controller 9 calculates the minimal operation time t31 corresponding to the first separation operation pattern, the minimal operation time t32 corresponding to the second separation operation pattern, and the minimal operation time t33 corresponding to the third separation operation pattern. Specifically, the controller 9 calculates a period of time from the time of the initial concentration C0 to the time of the target concentration TC3 in the first separation operation pattern (the graph G1) as the minimal operation time t31. The same applies to the minimal operation times t32 and t33.

Next, the controller 9 calculates a required amount of power for each of the separation operation patterns, based on the minimal operation time and the power data D2 (Step S152), similarly to Step S42.

Next, the controller 9 employs a separation operation pattern corresponding to a required amount of power smaller than an average amount of power of these required amounts of power (Step S153), similarly to Step S43.

Then, the controller 9 controls the decompression pump 75 with a control set value corresponding to the employed separation operation pattern (Steps S16 to S18), similarly to Steps S5 to S7.

When the separation operation in one of Steps S16 to S18 makes the solvent concentration of the mixed liquid in the collection tank Tk1 higher than or equal to the target concentration, the controller 9 stops the separation operation.

Next, the organic solvent regenerator 5 supplies the concentrate in the collection tank Tk1 to an exterior (Step S19), similarly to Step S8.

As described above, the controller 9 calculates the minimal operation time also using the initial concentration in the second example operations of the substrate processing system 100. Thus, the controller 9 can calculate the minimal operation time with higher accuracy, and further calculate a required amount of power with higher accuracy. Thus, the organic solvent regenerator 5 can more reliably perform the separation operation with a smaller amount of power consumption. In other words, the organic solvent regenerator 5 can further improve the efficiency.

In the aforementioned example, the organic solvent regenerator 5 performs the separation operation with the collection valve 52 being closed. Thus, the organic solvent regenerator 5 can avoid an inflow of the mixed liquid with a low solvent concentration into the collection tank Tk1 during a separation operation. Then, another collection tank (or a buffer tank) collects the mixed liquid discharged from the substrate processing apparatus 1 during the separation operation. Thus, the storage amount of the mixed liquid in the other collection tank increases with time during the separation operation. Thus, the separation operation needs to end until the storage amount of the mixed liquid in the other collection tank reaches a predetermined reference storage amount.

Here, the maximum operation time on the minimal operation time of the separation operation may be set. This maximum operation time is set, for example, in advance. The storage 94 may store maximum operation time data indicating the maximum operation time. The controller 9 may select separation operation patterns in each of which the solvent concentration can be raised to or above the target concentration within the maximum operation time, and calculate a required amount of power for each of the selected separation operation patterns. Then, the controller 9 may control the decompression pump 75 with a control set value corresponding to a separation operation pattern with a small required amount of power.

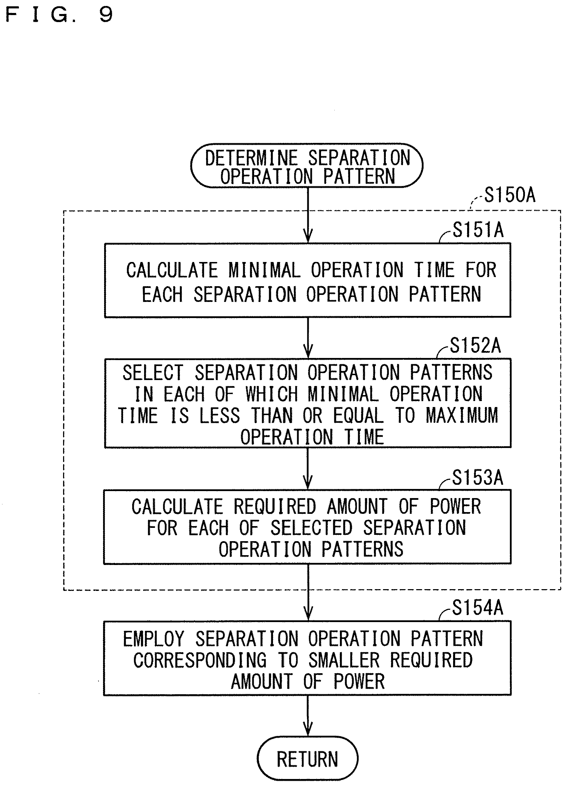

FIG. 9 is a flowchart indicating a third example method of determining a separation operation pattern. The controller 9 calculates a required amount of power for each operation pattern, based on the initial concentration, the target concentration, the operation pattern data D1, the maximum operation time data, and the power data D2 (Step S150A). For example, the controller 9 first calculates the minimal operation time for each of the operation patterns, based on the initial concentration, the target concentration, and the operation pattern data D1 (Step S151A), similarly to Step S151.

Next, the controller 9 selects separation operation patterns in each of which the minimal operation time is less than or equal to the maximum operation time (Step S152A).

Next, the controller 9 calculates a required amount of power for each of the selected separation operation patterns (Step S153A). For example, the controller 9 calculates the product of the minimal operation time and the power as the required amount of power, similarly to Step S152.

Next, the controller 9 employs a separation operation pattern corresponding to a required amount of power smaller than an average amount of power of these required amounts of power (Step S154A), similarly to Step S153.

As described above, in the third example, the controller 9 controls the decompression pump 75 with a control set value with which the minimal operation time is less than or equal to the maximum operation time and the minimal operation time is reduced. This allows the organic solvent regenerator 5 to raise the solvent concentration of the mixed liquid to or above the target concentration with a smaller required amount of power and within the maximum operation time.

The user may desire to know in which separation operation pattern the decompression pump 75 is controlled. Here, the controller 9 may display the separation operation pattern determined in Step S4 or Step S15 on the display 951. In other words, the controller 9 may display, on the display 951, the separation operation pattern corresponding to the control set value to be used in the separation operation. For example, the controller 9 may display the separation operation pattern on the display 951 during the separation operation. The separation operation pattern may be displayed on the display 951 in graph form. Specifically, the time variation in the solvent concentration may be displayed on the display 951 in graph form, as indicated by the graphs G1 to G3 where the horizontal axis represents the time and the vertical axis represents the solvent concentration. The controller 9 may display the separation operation pattern on the display 951, in response to an input of a display instruction by the user on the input part 952.

When a separation operation pattern is displayed on the display 951, the user can visually identify the separation operation pattern on the display 951. Thus, the usability of the organic solvent regenerator 5 can be improved.

In the aforementioned example, after the decompression pump 75 starts to be operated in the separation operation, the controller 9 continues to operate the decompression pump 75. This can reduce the amount of power consumption of the decompression pump 75 more than that when the controller 9 intermittently operates the decompression pump 75. This is because the large power is necessary when the decompression pump 75 is started. In other words, when start and stop of the decompression pump 75 are repeated, each time the decompression pump 75 is restarted, a large power consumption is required. In contrast, when the decompression pump 75 continues to be operated during the entire period of the separation operation, the amount of power consumption can be reduced because the decompression pump 75 is started once.

In the aforementioned example, the controller 9 calculates a required amount of power without using the power required for starting the decompression pump 75 (hereinafter referred to as startup power), which is not always limited to this. For example, the power data D2 includes information on the startup power. The controller 9 may calculate a required amount of power in consideration of the startup power required for starting the decompression pump 75.

While the required amount of power of the decompression pump 75 is calculated in Step S40, Step S150, or Step S150A in the aforementioned examples, a required amount of power of the organic solvent regenerator 5 may be calculated. Since, for example, the power of the temperature regulator 65 is relatively large, the amount of power of the temperature regulator 65 may be considered in calculating the required amount of power of the organic solvent regenerator 5. In other words, the controller 9 may calculate a sum of the amounts of power of the temperature regulator 65 and the decompression pump 75 as a required amount of power for each of the separation operation patterns. Specifically, the power data D2 includes information on the power of the temperature regulator 65. Then, the controller 9 multiplies the power of the temperature regulator 65 which is included in the power data D2 by the minimal operation time to calculate the amount of power of the temperature regulator 65 for each of the separation operation patterns. Furthermore, the controller 9 multiplies the power of the decompression pump 75 which is included in the power data D2 by the minimal operation time to calculate the amount of power of the decompression pump 75 for each of the separation operation patterns. Then, the controller 9 calculates a sum of the amounts of power of the temperature regulator 65 and the decompression pump 75 as a required amount of power of the organic solvent regenerator 5 for each of the separation operation patterns. The controller 9 employs a separation operation pattern corresponding to a required amount of power smaller than an average amount of power of the calculated required amounts of power.

In some cases, the power of the cooler 73 is large. In this case, the amount of power of the cooler 73 may be considered in calculating a required amount of power of the organic solvent regenerator 5. For example, the power data D2 may include information on the power of the cooler 73. In this case, the controller 9 may calculate a sum of the product of the power and the minimal operation time of the temperature regulator 65, the product of the power and the minimal operation time of the cooler 73, and the product of the power and the minimal operation time of the decompression pump 75, as the required amount of power of the organic solvent regenerator 5 for each of the separation operation patterns. Then, the controller 9 may employ a separation operation pattern corresponding to a required amount of power smaller than an average amount of power of the calculated required amounts of power.

The concentration sensor Sn1 measures the initial concentration of the mixed liquid in the aforementioned examples. However, when the initial concentration is known in advance, the initial concentration may be set in advance, and stored in the storage 94. Alternatively, the controller 9 may calculate the initial concentration, based on the supply amount of pure water and the supply amount of an organic solvent which are supplied by the substrate processing apparatus 1 to the substrate W. Embodiment 3 will also describe an example method of calculating the initial concentration.

### [Embodiment 2]

When the initial concentration of the mixed liquid discharged from the substrate processing apparatus 1 is too low, in some cases, the organic solvent regenerator 5 cannot raise the solvent concentration of the mixed liquid to or above the target concentration within the maximum operation time, even in the first separation operation pattern with the highest increasing speed of the solvent concentration. Thus, Embodiment 2 will describe measures when the initial concentration is low.

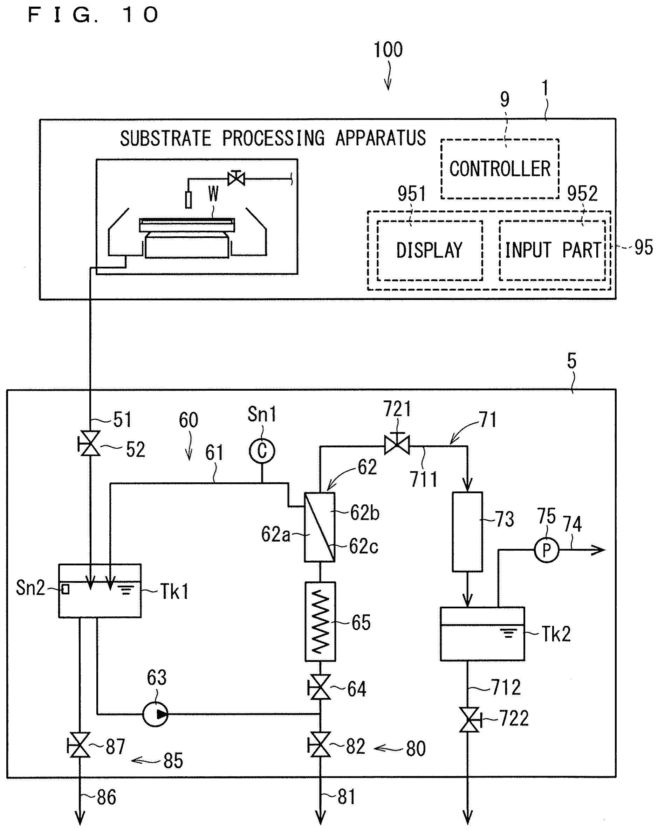

FIG. 10 is a diagram schematically illustrating a first example structure of the substrate processing system 100 according to Embodiment 2. The first example structure of the substrate processing system 100 according to Embodiment 2 differs from that of the substrate processing system 100 according to Embodiment 1 in the presence or absence of a discharge part 85. The discharge part 85 discharges the mixed liquid in the collection tank Tk1 to a drainage part (e.g., drainage equipment of a factory utility that is not illustrated). In the example of FIG. 10, the discharge part 85 includes a discharge pipe 86 and a discharge valve 87. An upstream end of the discharge pipe 86 is connected to, for example, the bottom of the collection tank Tk1, and a downstream end of the discharge pipe 86 is connected to the drainage part. The discharge valve 87 is disposed in the discharge pipe 86. The discharge valve 87 is controlled by the controller 9, and switches between closing and opening of the discharge pipe 86.

Furthermore, a lower-limit concentration is set for the initial concentration of the mixed liquid in Embodiment 2. This lower-limit concentration is set lower than the target concentration. For example, the lower-limit concentration is set to a lower limit value of the initial concentration with which the solvent concentration can be raised to or above the target concentration within the maximum operation time, in the first separation operation pattern with the highest increasing speed of the solvent concentration. This lower-limit concentration may be set, for example, in advance, and lower-limit concentration data indicating the lower-limit concentration may be stored in the storage 94.

The controller 9 causes the discharge part 85 to discharge the mixed liquid in the collection tank Tk1 when the initial concentration of the mixed liquid in the collection tank Tk1 is lower than the lower-limit concentration.

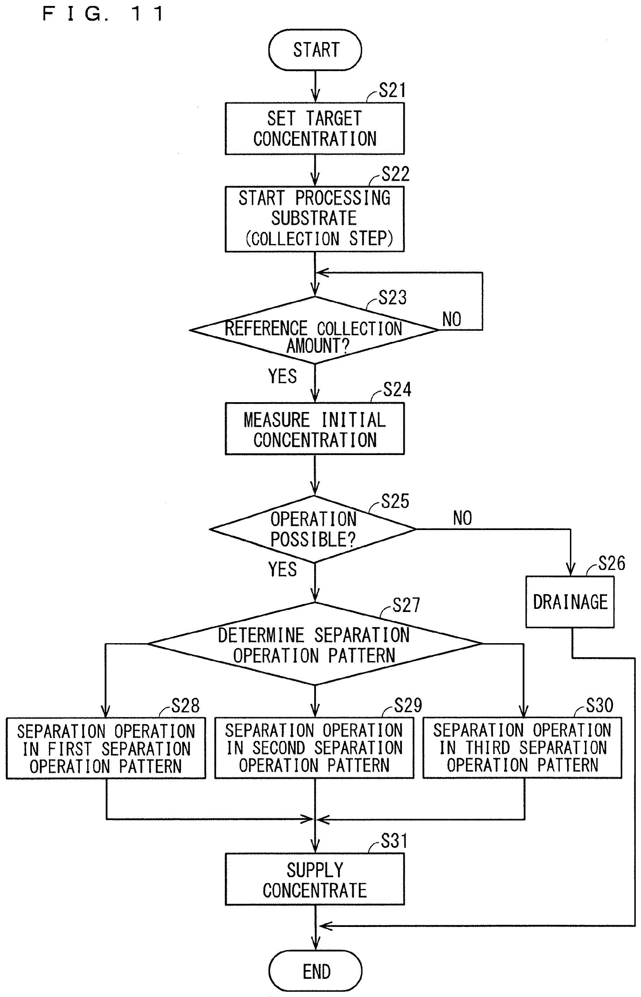

FIG. 11 is a flowchart illustrating first example operations of the substrate processing system 100 according to Embodiment 2. In the example of FIG. 11, Steps S21 to S31 are executed. Steps S21 to S24 are identical to Steps S11 to S14.

After Step S24, the controller 9 determines whether the separation operation is possible, based on the initial concentration (Step S25: an operation feasibility determining step). Specifically, the controller 9 determines whether the initial concentration measured in Step S24 is lower than the lower-limit concentration. When the initial concentration is lower than the lower-limit concentration, the solvent concentration cannot be raised to or above the target concentration even by performing the separation operation. Thus, the discharge part 85 discharges the mixed liquid in the collection tank Tk1 (Step S26: a drainage step). Specifically, the controller 90 opens the discharge valve 87. Thereby, the mixed liquid in the collection tank Tk1 is discharged to the drainage part through the discharge pipe 86. Discharge of the mixed liquid in the collection tank Tk1 allows the collection tank Tk1 to receive the mixed liquid discharged from the substrate processing apparatus 1 again.

When the initial concentration is higher than or equal to the lower-limit concentration, the controller 9 determines a separation operation pattern (Step S27), similarly to Step S4 or S15. Then, the organic solvent regenerator 5 performs the separation operation in the determined separation operation pattern (Steps S28 to S30), and supplies the concentrate in the collection tank Tk1 to an exterior after the end of the separation operation (Step S31).

As described above, the organic solvent regenerator 5 discharges the mixed liquid in the collection tank Tk1 when the initial concentration of the mixed liquid in the collection tank Tk1 is lower than the lower-limit concentration. In other words, the organic solvent regenerator 5 disposes of the mixed liquid in the collection tank Tk1 without performing the separation operation on the mixed liquid in the collection tank Tk1. Thus, an unnecessary separation operation can be avoided, and the power consumption of the organic solvent regenerator 5 can be reduced.

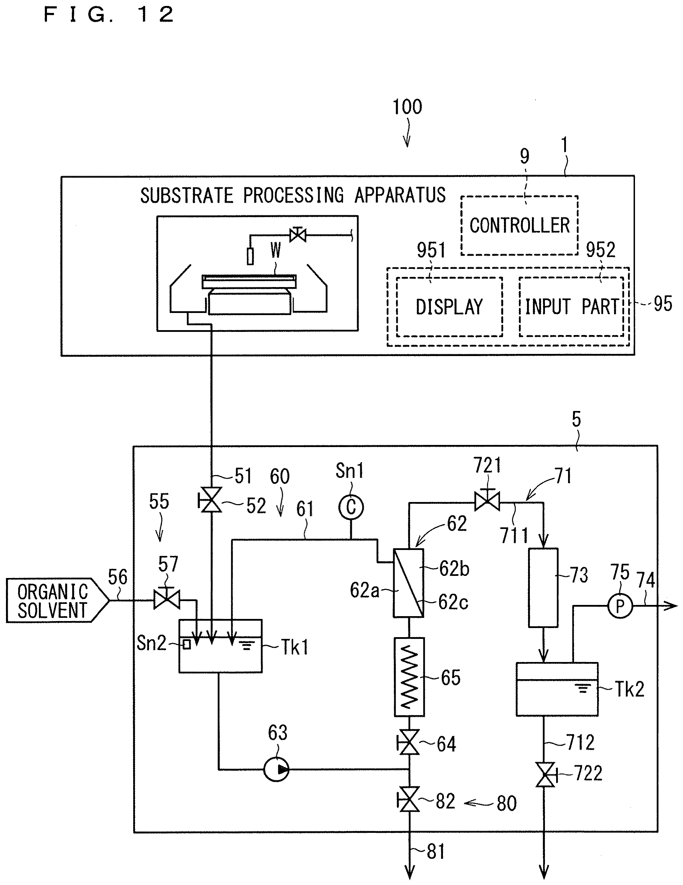

FIG. 12 is a diagram schematically illustrating a second example structure of the substrate processing system 100 according to Embodiment 2. The second example structure of the substrate processing system 100 according to Embodiment 2 differs from that of the substrate processing system 100 according to Embodiment 1 in the presence or absence of an organic solvent supply part 55. The organic solvent supply part 55 supplies an organic solvent to the collection tank Tk1. The organic solvent supply part 55 may supply a new organic solvent that is not used for processing the substrate W to the collection tank Tk1. The organic solvent supply part 55 supplies the organic solvent to the collection tank Tk1, so that the solvent concentration of the mixed liquid in the collection tank Tk1 can be increased.

In the example of FIG. 12, the organic solvent supply part 55 includes a supply pipe 56 and a supply valve 57. An upstream end of the supply pipe 56 is connected to an organic solvent supply source, and a downstream end of the supply pipe 56 is connected to the collection tank Tk1. The organic solvent supply source includes a reservoir (e.g., a tank) that reserves an organic solvent. The supply valve 57 is disposed in the supply pipe 56. The supply valve 57 is controlled by the controller 9, and switches between closing and opening of the supply pipe 56.

The controller 9 causes the organic solvent supply part 55 to supply the organic solvent to the collection tank Tk1 when the initial concentration of the mixed liquid in the collection tank Tk1 is lower than the lower-limit concentration. Thereby, the initial concentration of the mixed liquid in the collection tank Tk1 can be raised to or above the lower-limit concentration. The controller 9 performs the separation operation while the initial concentration is higher than or equal to the lower-limit concentration.

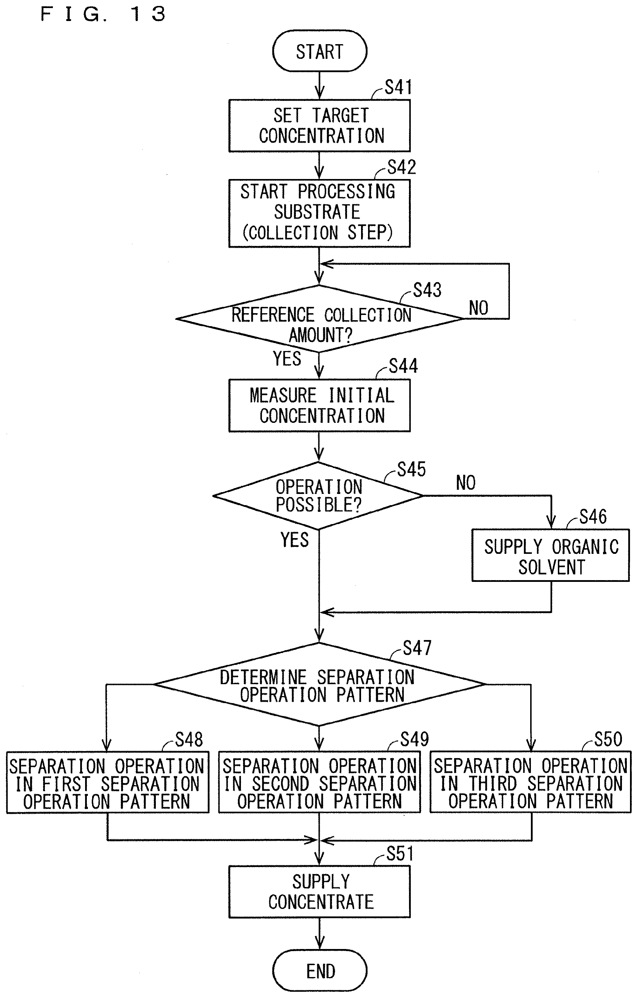

FIG. 13 is a flowchart illustrating second example operations of the substrate processing system 100 according to Embodiment 2. In the example of FIG. 13, Steps S41 to S51 are executed. Steps S41 to S45 and Steps S47 to S51 are identical to Steps S21 to S25 and Steps S27 to S31, respectively.

When the initial concentration is lower than the lower-limit concentration in Step S45, the organic solvent supply part 55 supplies the organic solvent to the collection tank Tk1 (Step S46: an organic solvent supply step). Specifically, the controller 90 opens the supply valve 57. This allows the organic solvent to flow into the collection tank Tk1 through the supply pipe 56 and merge into the mixed liquid in the collection tank Tk1. Thus, the initial concentration of the mixed liquid in the collection tank Tk1 is increased according to an inflow amount of the organic solvent. The controller 9 may close the supply valve 57 when the initial concentration measured by the concentration sensor Sn1 is higher than or equal to the lower-limit concentration.

Next, the controller 9 executes Steps S47 to S51. When the initial concentration is lower than the lower-limit concentration in Step S45, the controller 9 also executes Steps S47 to S51.

As described above, when the initial concentration in the collection tank Tk1 is lower than the lower-limit concentration in the second example according to Embodiment 2, the organic solvent regenerator 5 raises the initial concentration to or above the lower-limit concentration by supplying the organic solvent to the collection tank Tk1. Then, the organic solvent regenerator 5 raises, to or above the target concentration, the solvent concentration higher than or equal to the lower-limit concentration through the separation operation. This can further reduce a waste amount of the organic solvent.

### [Embodiment 3]

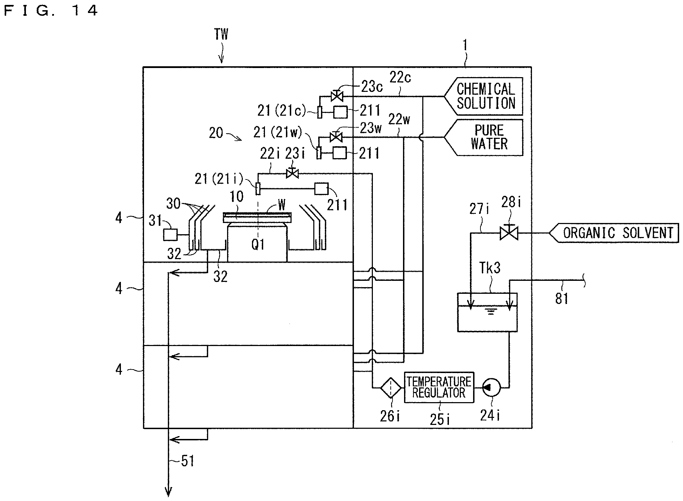

Embodiment 3 will outline an example structure of the substrate processing apparatus 1. FIG. 14 is a diagram schematically illustrating an example structure of the substrate processing apparatus 1. In the example of FIG. 14, the substrate processing apparatus 1 includes a plurality of processing units 4. Each of the processing units 4 performs a wet process on the substrate W. In the example of FIG. 14, each of the processing units 4 is a single-wafer processing device that processes the substrates W one by one. In the example of FIG. 14, the processing units 4 are stacked in the vertical direction. Here, the processing units 4 form a tower TW. A plurality of towers TW may be disposed adjacent to each other in the horizontal direction.

The processing unit 4 includes a substrate holder 10, a dispenser 20, and guards 30. The substrate holder 10 rotates the substrate W about a rotation axis line Q1 while holding the substrate W in a horizontal attitude. The horizontal attitude herein is an attitude in which the thickness direction of the substrate W is along the vertical direction. The rotation axis line Q1 is an axis that passes through the center of the substrate W and is along the vertical direction. This substrate holder 10 may be referred to as a spin chuck. The substrate holder 10 may be a spin chuck of a mechanical chuck type, a vacuum chuck type, or an electrostatic chuck type.

The dispenser 20 sequentially dispenses processing liquids of a plurality of types toward the main surface of the substrate W held by the substrate holder 10. The dispenser 20 dispenses, for example, a chemical solution, pure water, and an organic solvent in this order toward the substrate W. The dispenser 20 includes nozzles 21. In the example of FIG. 14, the dispenser 20 includes a nozzle 21c for chemical solution, a nozzle 21w for pure water, and a nozzle 21i for organic solvent. The nozzle 21c is connected to a chemical solution supply source through a supply pipe 22c. The nozzle 21w is connected to a pure water supply source through a supply pipe 22w. The nozzle 21i is connected to a solvent tank Tk3 through a supply pipe 22i. A supply valve 23c is disposed in the supply pipe 22c. A supply valve 23w is disposed in the supply pipe 22w. A supply valve 23i is disposed in the supply pipe 22i.

In the example of FIG. 14, a liquid feeder 24i, a temperature regulator 25i, and a filter 26i are disposed in the supply pipe 22i. The liquid feeder 24i is a feed pump, and causes the organic solvent to flow from the solvent tank Tk3 toward the nozzle 21i. The temperature regulator 25i regulates the temperature of the organic solvent flowing through the supply pipe 22i. The temperature regulator 25i is, for example, a heater. The filter 26i captures impurities in the organic solvent flowing through the supply pipe 22i.

The solvent tank Tk3 is connected to the organic solvent supply source through a replenish pipe 27i. A replenish valve 28i is disposed in the replenish pipe 27i. Upon opening the replenish valve 28i, the organic solvent is supplied to the solvent tank Tk3 through the replenish pipe 27i.

In the example of FIG. 14, the downstream end of the supply pipe 81 of the organic solvent regenerator 5 is connected to the solvent tank Tk3. In this structure, the concentrate from the organic solvent regenerator 5 is supplied to the solvent tank Tk3 through the supply pipe 81.

In the example of FIG. 14, the processing unit 4 includes nozzle movement drivers 211 that move the respective nozzles 21. Each of the nozzle movement drivers 211 moves the nozzle 21 between a processing position and a nozzle waiting position. The processing position is a position at which the nozzle 21 dispenses the processing liquid toward the substrate W, for example, a position facing the center of the substrate W in the vertical direction. The waiting position is a position at which the nozzle 21 does not dispense the processing liquid toward the substrate W, and is, for example, a position outward of the substrate W in the radial direction. The nozzle movement driver 211 includes, for example, a motor.

Once the dispenser 20 dispenses the processing liquid toward the main surface of the rotating substrate W, the processing liquid that sits on the main surface of the substrate W flows outward in the radial direction by centrifugal force of rotation of the substrate W. Then, the processing liquid flies off from the outer edge of the substrate W. Since the processing liquid flows through the main surface of the substrate W, a process corresponding to the type of the processing liquid is performed on the substrate W.

The guard 30 is of a tubular shape surrounding the substrate holder 10, and receives the processing liquid that flies off from the outer edge of the substrate W. In the example of FIG. 14, a plurality of the guards 30 are concentrically disposed. A guard lifting driver 31 lifts and lowers the guards 30 between an upper position and a lower position. The upper position is a position at which the upper end of each of the guards 30 is located above the substrate W held by the substrate holder 10. The guards 30 located at the upper position receive the processing liquid that flies off from the outer edge of the substrate W. The lower position is a position at which the upper end of each of the guards 30 is located below the substrate W held by the substrate holder 10. The guards 30 may be used depending on each of the types of the processing liquids. The guard lifting driver 31 includes, for example, a motor.

A cup 32 is disposed below each of the guards 30. The processing liquid received by each of the guards 30 runs down into the cup 32, and is collected by the cup 32. The cups 32 are connected to upstream ends of collection pipes for the respective processing liquids. For example, the cup 32 for organic solvent is connected to an upstream end of the collection pipe 51.

The dispenser 20 dispenses a chemical solution, pure water, and an organic solvent in this order toward the substrate W. The dispenser 20 dispenses a chemical solution, so that a chemical solution process (e.g., etching) can be performed on the main surface of the substrate W. The guard 30 for chemical solution is located at the upper position when the chemical solution is dispensed, and receives the chemical solution that flies off from the outer edge of the substrate W. Next, the dispenser 20 dispenses pure water. Consequently, the pure water forces the chemical solution out of the main surface of the substrate W. Thus, the processing liquid on the main surface of the substrate W is replaced from the chemical solution with a rinse liquid. Next, the dispenser 20 dispenses an organic solvent. Consequently, the organic solvent forces the pure water out of the main surface of the substrate W. Thus, the processing liquid on the main surface of the substrate W is replaced from the pure water with the organic solvent. The guard 30 for organic solvent is located at the upper position when the organic solvent is dispensed, and receives the pure water and the organic solvent which fly off from the outer edge of the substrate W. The collection tank Tk1 collects the pure water and the organic solvent through the cups 32 and the collection pipe 51. Next, the substrate holder 10 dries the substrate W by rapidly rotating the substrate W.

As described above, when the initial concentration of the mixed liquid is lower than the lower-limit concentration, it is difficult to raise the solvent concentration to or above the target concentration through the separation operation. Furthermore, the initial concentration is dependent on a recipe. Here, the controller 9 may calculate the initial concentration of the mixed liquid discharged from the substrate processing apparatus 1, based on recipe information indicating the recipe. The storage 94 stores the recipe information. The controller 9 may calculate the initial concentration based on, for example, an amount of pure water on the main surface of the substrate W initially existing in a solvent collection state in which the guard 30 for organic solvent is located at the upper position, a flow rate and the dispensing time at which the pure water is dispensed to the substrate W, and a flow rate and the dispensing time at which the organic solvent is dispensed to the substrate W. The amount of pure water on the main surface of the substrate W is dependent on the rotation speed of the substrate W. Thus, a correspondence between the amount of pure water on the main surface of the substrate W and the rotation speed of the substrate W may be set in advance. The controller 9 may estimate the amount of pure water on the main surface of the substrate W, based on the rotation speed of the substrate W and the correspondence. The controller 9 calculates the amount of pure water flowing into the collection pipe 51, based on the amount of pure water on the main surface of the substrate W which initially exists in the solvent collection state, and the flow rate and the dispensing time of the pure water in the solvent collection state. Furthermore, the controller 9 calculates the amount of the organic solvent flowing into the collection pipe 51, based on the flow rate and the dispensing time of the organic solvent in the solvent collection state. Then, the controller 9 calculates the initial concentration, based on the amount of pure water and the amount of organic solvent.

When the initial concentration is lower than the lower-limit concentration, the controller 9 may display the state as concentration information on the display 951. For example, when the user sets a recipe using the user interface 95, the controller 9 calculates the initial concentration based on the recipe. When the initial concentration is lower than the lower-limit concentration, the controller 9 displays the concentration information on the display 951. The user can recognize a decrease in the initial concentration by visually identifying the concentration information on the display 951. Thus, the user may perform a recipe updating input for updating the flow rate of the organic solvent to be supplied to the substrate W to a larger value.

While the method of regenerating an organic solvent, the organic solvent regenerator 5, and the substrate processing system 100 are described in detail above, the description is in all aspects illustrative and does not restrict this disclosure. The aforementioned various modifications are applicable in combination unless any contradiction occurs. Therefore, numerous modifications and variations that have not yet been exemplified are devised without departing from the scope of the present disclosure.

The present disclosure includes the following aspects.

A first aspect is a method of regenerating an organic solvent, the method includes: collecting a mixed liquid of an organic solvent and water in a collection tank, the organic solvent and the water being discharged from a substrate processing apparatus that processes a substrate; and performing a separation operation of circulating the mixed liquid through a circulation path formed by the collection tank and a circulation pipe in which a membrane separator is disposed, and reducing, using a decompression pump, a pressure in a second path of the membrane separator, the membrane separator including a fist path, the second path, and a separation membrane, the first path being inserted into the circulation pipe, the mixed liquid passing through the first path, the separation membrane partitioning the first path and the second path, the performing including controlling the decompression pump with a control set value based on a target concentration on a solvent concentration of the mixed liquid.

A second aspect is the method according to the first aspect, wherein the performing includes controlling the decompression pump with the control set value with which the pressure in the second path becomes lower as the target concentration is higher.

A third aspect is the method according to the first aspect, wherein a required amount of power necessary for achieving the target concentration is calculated for each of separation operation patterns, based on the target concentration, power data indicating power of the decompression pump for each of control set values, and operation pattern data indicating, for each of the control set values, one of the separation operation patterns representing time variations in the solvent concentration during the separation operation, and the decompression pump is controlled with one of the control set values corresponding to one of the separation operation patterns in which a required amount of power is lower than an average amount of power of the calculated required amounts of power.

A fourth aspect is the method according to the third aspect, wherein the required amount of power is calculated for each of the separation operation patterns, based on the target concentration, the power data, the operation pattern data, and an initial concentration that is the solvent concentration of the mixed liquid before the separation operation is executed.

A fifth aspect is the method according to the third or fourth aspect, wherein the power data includes information on power of a temperature regulator disposed in the circulation pipe, and the required amount of power is calculated by a sum of an amount of the power of the temperature regulator and an amount of the power of the decompression pump.

A sixth aspect is the method according to the fifth aspect, wherein the power data includes information on power of a cooler disposed in a separation pipe connected to the second path of the membrane separator, and the required amount of power is calculated by a sum of the amount of the power of the temperature regulator, an amount of the power of the cooler, and the amount of the power of the decompression pump.

A seventh aspect is the method according to any one of the third to sixth aspects, wherein at least one of the separation operation patterns in which the solvent concentration is raised to or above the target concentration within a predetermined maximum operation time is selected, and the required amount of power is calculated for each of the at least one of the separation operation patterns selected.

An eighth aspect is the method according to any one of the third to seventh aspects, wherein the separation operation pattern corresponding to the one of the control set values for controlling the decompression pump is displayed on a display.

A ninth aspect is the method according to any one of the first to eighth aspects, and the method further includes discharging the mixed liquid in the collection tank to an exterior through a discharge pipe when an initial concentration is lower than a lower-limit concentration, the initial concentration being the solvent concentration of the mixed liquid before the separation operation is executed.

A tenth aspect is the method according to any one of the first to ninth aspects, and the method further includes supplying the organic solvent to the collection tank through a supply pipe when an initial concentration is lower than a lower-limit concentration, the initial concentration being the solvent concentration of the mixed liquid before the separation operation is executed.

An eleventh aspect is an organic solvent regenerator including: a collection tank storing a mixed liquid of an organic solvent and water, the organic solvent and the water being discharged from a substrate processing apparatus that processes a substrate; a circulator including a circulation pipe connected to the collection tank, and a membrane separator disposed in the circulation pipe, the membrane separator including a first path which is inserted into the circulation pipe and through which the mixed liquid passes, a second path, and a separation membrane which partitions the first path and the second path and which allows the water in the mixed liquid to pass from the first path to the second path; a separation pipe connected to the second path of the membrane separator; a decompression pump that reduces a pressure in the second path through the separation pipe; and a controller that performs a separation operation of controlling the decompression pump with a control set value based on a target concentration on a solvent concentration of the mixed liquid, and causing the circulator to circulate the mixed liquid.

A twelfth aspect is a substrate processing system including: the organic solvent regenerator according to the eleventh aspect; and the substrate processing apparatus.

According to the first, eleventh, and twelfth aspects, a more efficient separation operation can be implemented.

According to the second aspect, the pressure in the second path is lower when the target concentration is higher. Thus, the solvent concentration of the mixed liquid can be more reliably raised to or above the target concentration. When the target concentration is low, the decompression pump can be controlled with lower power.

According to the third aspect, the solvent concentration of the mixed liquid can be raised to or above the target concentration with a smaller amount of power.

According to the fourth aspect, the amount of power can be reduced with higher accuracy.

According to the fifth and sixth aspects, the amount of power can be calculated with higher accuracy.

According to the seventh aspect, the solvent concentration of the mixed liquid can be more reliably raised to or above the target concentration within the maximum operation time.

According to the eighth aspect, the usability can be improved.

According to the ninth aspect, an unnecessary separation operation can be avoided.

According to the tenth aspect, the solvent concentration can be raised to or above the lower-limit concentration by supplying an organic solvent to a collection tank. Thus, a subsequent separation operation can raise the solvent concentration to or above the target concentration.

## Claims

1. A method of regenerating an organic solvent, the method comprising:
collecting a mixed liquid of an organic solvent and water in a collection tank (Tk1), the organic solvent and the water being discharged from a substrate processing apparatus (1) that processes a substrate (W); and
performing a separation operation of circulating the mixed liquid through a circulation path formed by the collection tank (Tk1) and a circulation pipe (61) in which a membrane separator (62) is disposed, and reducing, using a decompression pump (75), a pressure in a second path (62b) of the membrane separator (62), the membrane separator (62) including a first path (62a), the second path (62b), and a separation membrane (62c),the first path (62a) being inserted into the circulation pipe (61), the mixed liquid passing through the first path (62a),, the separation membrane (62c) partitioning the first path (62a) and the second path (62b), the performing including controlling the decompression pump (75) with a control set value based on a target concentration on a solvent concentration of the mixed liquid.

2. The method according to claim 1,
wherein the performing includes controlling the decompression pump (75) with the control set value with which the pressure in the second path (62b) becomes lower as the target concentration is higher.

3. The method according to claim 1,
wherein a required amount of power necessary for achieving the target concentration is calculated for each of separation operation patterns, based on the target concentration, power data indicating power of the decompression pump (75) for each of control set values, and operation pattern data indicating, for each of the control set values, one of the separation operation patterns representing time variations in the solvent concentration during the separation operation, and the decompression pump (75) is controlled with one of the control set values corresponding to one of the separation operation patterns in which a required amount of power is lower than an average amount of power of the calculated required amounts of power.

4. The method according to claim 3,
wherein the required amount of power is calculated for each of the separation operation patterns, based on the target concentration, the power data, the operation pattern data, and an initial concentration that is the solvent concentration of the mixed liquid before the separation operation is executed.

5. The method according to claim 3 or 4,
wherein the power data includes information on power of a temperature regulator (65) disposed in the circulation pipe (61), and
the required amount of power is calculated by a sum of an amount of the power of the temperature regulator (65) and an amount of the power of the decompression pump (75).

6. The method according to claim 5,
wherein the power data includes information on power of a cooler (73) disposed in a separation pipe (71) connected to the second path (62b) of the membrane separator (62), and
the required amount of power is calculated by a sum of the amount of the power of the temperature regulator (65), an amount of the power of the cooler (73), and the amount of the power of the decompression pump (75).

7. The method according to any one of claims 3 to 6,
wherein at least one of the separation operation patterns in which the solvent concentration is raised to or above the target concentration within a predetermined maximum operation time is selected, and the required amount of power is calculated for each of the at least one of the separation operation patterns selected.

8. The method according to any one of claims 3 to 7,
wherein the separation operation pattern corresponding to the one of the control set values for controlling the decompression pump (75) is displayed on a display (951).

9. The method according to any one of claims 1 to 8, further comprising
discharging the mixed liquid in the collection tank (Tk1) to an exterior through a discharge pipe (86) when an initial concentration is lower than a lower-limit concentration, the initial concentration being the solvent concentration of the mixed liquid before the separation operation is executed.

10. The method according to any one of claims 1 to 9, further comprising
supplying the organic solvent to the collection tank (Tk1) through a supply pipe (56) when an initial concentration is lower than a lower-limit concentration, the initial concentration being the solvent concentration of the mixed liquid before the separation operation is executed.

11. An organic solvent regenerator, comprising:
a collection tank (Tk1) storing a mixed liquid of an organic solvent and water, the organic solvent and the water being discharged from a substrate processing apparatus (1) that processes a substrate (W);
a circulator (60) including a circulation pipe (61) connected to the collection tank (Tk1), and a membrane separator (62) disposed in the circulation pipe (61), the membrane separator (62) including a first path (62a) which is inserted into the circulation pipe (61) and through which the mixed liquid passes, a second path (62b), and a separation membrane (62c) which partitions the first path (62a) and the second path (62b) and which allows the water in the mixed liquid to pass from the first path (62a) to the second path (62b);
a separation pipe (71) connected to the second path (62b) of the membrane separator (62);
a decompression pump (75) that reduces a pressure in the second path (62b) through the separation pipe (71); and
a controller (9) that performs a separation operation of controlling the decompression pump (75) with a control set value based on a target concentration on a solvent concentration of the mixed liquid, and causing the circulator (60) to circulate the mixed liquid.

12. A substrate processing system, comprising:
the organic solvent regenerator (5) according to claim 11; and
the substrate processing apparatus (1).
